Europäisches Patentamt

European Patent Office

Office européen des brevets

(19)

(11) Veröffentlichungsnummer: **0 329 804 B1**

(12) **EUROPÄISCHE PATENTSCHRIFT**

(45) Veröffentlichungstag der Patentschrift: **17.06.92**

(51) Int. Cl.5: **B01D 33/29**, F16J 15/00

(21) Anmeldenummer: **88102664.5**

(22) Anmeldetag: **24.02.88**

(54) **Vakuumfilter mit lösbar eingeklemmtem Dichtstreifen.**

(43) Veröffentlichungstag der Anmeldung:
**30.08.89 Patentblatt 89/35**

(45) Bekanntmachung des Hinweises auf die
Patenterteilung:
**17.06.92 Patentblatt 92/25**

(84) Benannte Vertragsstaaten:
**AT BE CH DE ES FR GB GR IT LI LU NL SE**

(56) Entgegenhaltungen:
EP-A- 0 021 576     DD-A- 204 855
DE-A- 533 243      DE-C- 1 045 747
DE-C- 1 098 305    GB-A- 2 141 492
US-A- 1 878 998    US-A- 2 853 193
US-A- 3 139 404

(73) Patentinhaber: **DORR-OLIVER INCORPORATED**
**Corporate Headquarters 77, Havemeyer Lane**
**P.O. Box 9312**
**Stamford Connecticut 06904-9312(US)**

(72) Erfinder: **Pietzsch, Kurt**
**Memelstr. 11**
**W-6200 Wiesbaden-Sonnenberg(DE)**

(74) Vertreter: **Weber, Dieter, Dr. et al**
**Dr. Dieter Weber und Dipl.-Phys. Klaus Seif-**
**fert Patentanwälte Gustav-Freytag-Strasse**
**25 Postfach 6145**
**W-6200 Wiesbaden 1(DE)**

## Beschreibung

Die Erfindung betrifft ein Vakuumfilter für die Trennung von Feststoffen aus Flüssigkeiten mit einer umlaufenden, endlosen Reihe von Trögen, die ein gemeinsames horizontales Filterdeck bilden, auf dem ein endloses Filtertuch aufgelegt ist, wobei jeder Trog einen Trogboden mit je einer randlos ausgebildeten, sich quer zur Bewegungsrichtung erstreckenden vorderen und hinteren Kante, sowie seitliche Dämme aufweist, und wobei ein elastischer Dichtstreifen zwischen den Kanten aufeinanderfolgender Tröge angeordnet ist.

Es sind Vakuumfilter dieser Art bereits bekannt, bei denen der Förderer um im Längsabstand voneinander angeordnete Ränder umläuft, wobei auf dem Obertrum ein horizontales Filterdeck durch eine Reihe von Trögen gebildet wird, die vorzugsweise über einem stationären Vakuumkanal geführt sind. Man verwendet diese Vakuumfilter für die Filtration, weil auf diese Weise die Bildung des Kuchens durch Gravitation unterstützt wird und die Kuchenwäsche wirkungsvoller erfolgen kann.

Das Filterdeck des bekannten Vakuumfilters wird also durch das Obertrum der endlos umlaufenden Reihe von Trögen gebildet, die in ihrer Bewegungsrichtung einer direkt hinter dem anderen liegen, wobei jeder Trog in Laufrichtung vorn und hinten über einen Dichtstreifen mit dem nächst benachbarten Trog verbunden ist. Durch die randlose Ausgestaltung jedes Troges kann über der Filtrationszone, d.h. auf das Filterdeck, das erwähnte Filtertuch aufgelegt werden. Zwischen Vorderkante des in Bewegungsrichtung hinteren Troges und rückwärtiger Kante des in Bewegungsrichtung vorderen Troges muß der Dichtstreifen vorgesehen sein, damit das Vakuum gegenüber der Atmosphäre abgedichtet aufrechterhalten bleiben kann. Jeder Trog hat nämlich eine eigene Verbindung mit einem darunterliegenden Vakuumkalnal und ist so aufgebaut, daß Trog und Vakuumkanal zusammen eine gleitende Abdichtung bilden. Das Vakuum sorgt für das Absaugen der Flüssigkeit aus der zu filternden Masse, die auf dem Filtertuch liegt, und es versteht sich, daß an der jeweiligen Stoßkante zwischen zwei hintereinanderlaufenden Trögen die Abdichtung über den beschriebenen Dichtstreifen möglichst gut sein soll.

Es sind bereits zahlreiche Überlegungen bei dem bekannten Vakuumfilter angestellt worden, wie bei Aufrechterhaltung einer einwandfreien Funktion, d.h. Trennung von Feststoffen aus Flüssigkeiten und umgekehrt, eine gute Reinigung und gegebenenfalls auch Wartung der Maschine, einschließlich Reparatur vorgenommen werden kann. Es versteht sich, daß für den Betrieb des Vakuumfilters unvermeidbar an verschiedenen Stellen Gleitflächen bzw. Gleitbewegungen vorgesehen sind, wobei der durch die Gleitbewegung entstehende Verschleiß durch entsprechend günstig lösbare Teile unkritisch gemacht werden soll.

Ein besonderes Verschleißteil ist der Dichtstreifen zwischen den in Bewegungsrichtung hintereinanderlaufenden Trögen. Ein bekanntes Vakuum-Zellenbandfilter weist eine große Anzahl derartiger Tröge auf, und aus konstruktiven Gründen ergibt sich zwischen den Trögen jeweils ein Spalt, der flexibel abgedichtet werden muß, um einer Vakuumverlust zu verhindern.

Bekannte Vakuumfilter haben zwar bereits Dichtstreifen zwischen den Trögen, es hat sich aber gezeigt, daß diese Dichtstreifen manchmal nicht die für das angelegte Vakuum am Filterdeck erforderliche Dichtigkeit gewährleisten und insbesondere nach schon verhältnismäßig kurzer Betriebsdauer einem Abrieb unterworfen sind, so daß die Abdichtfunktion beeinträchtigt ist und der Dichtstreifen ausgewechselt werden müßte. Das Auswechseln dieses auch Zellendichtung genannten Dichtstreifens hat bei den herkömmlichen Maschinen Schwierigkeiten bereitet und war insbesondere zeitaufwendig, so daß die Stillstandszeiten der Vakuum-Zellenbandfilter unerwünscht groß waren.

Der Erfindung liegt daher die Aufgabe zugrunde, ein Vakuumfilter der eingangs näher bezeichneten Art dahingehend zu verbessern, daß eine gute Vakuumabdichtung, insbesondere zwischen zwei aufeinanderfolgenden Trögen, und eine leichtere Auswechselbarkeit des Dichtstreifens möglich werden.

Diese Aufgabe wird erfindungsgemäß dadurch gelöst, daß der Dichtstreifen sich über die gesamte Breite des Troges, einschließlich der Dämme erstreckt und daß der Dichtstreifen von einem federbelastet bewegbaren Klemmwinkel gegen die in Bewegungsrichtung vordere und/oder hintere Kante des Rohres lösbar festgeklemmt ist.

Man kann auf diese Weise einen flexiblen Dichtstreifen aus geeignetem, elastomerem Material verwenden, weil der Dichtstreifen durch Klemmen an der Trogkante im Spalt zwischen in Bewegungsrichtung laufenden Trögen des Filterdecks angebracht ist. Die Klemmung erfordert keine Ausnehmungen oder Löcher im Dichtstreifen, so daß dessen Funktion und daher Ausgestaltung vollständig auf das Abdichten konzentriert werden kann. Damit ist eine gute Vakuumabdichtung gewährleistet. Andererseits ist die Klemmung erfindungsgemäß lösbar vorgesehen, so daß der Dichtstreifen auch leichter auswechselbar ist.

Besonders vorteilhaft ist es erfindungsgemäß, wenn der Dichtstreifen über die gesamte Breite des Troges, einschließlich der Dämme, einstückig verlaufend angebracht und im Querschnitt etwa U-förmig ist, wobei der eine Schenkel des U als Klemmteil und er andere als Dichtlippe ausgestaltet ist, und daß der Klemmwinkel nur den Klemmteil des Dichtstreifens umgreift. Quer zur Bewegungsrichtung der Tröge ist also die angesprochene Breite des Troges zu verstehen, die nicht nur die Breite des Trogbodens ist sondern auch die Seitenränder einschließt, welche Dämme genannt werden. Die Dämme des Troges stehen vorzugsweise im Bereich des Filterdecks sich nach oben erweiternd schräg hoch. Der Dichtstreifen gemäß der Erfindung ist also derart lang, daß er von der einen Außenkante des Dammes des Troges, über den Trogboden hinweg, über den gegenüberliegenden Damm bis zu dessen Außenende verläuft. Durch die einstückige Ausbildung des Dichtstreifens, welcher diese Kante des Troges abdeckt, ist die Abdichtungsfunktion besonders zuverlässig. Dieser Vorteil wird noch weiter dadurch gesteigert, daß der Dichtstreifen im Querschnitt etwa U-förmig ist mit einem Klemmteil als einer U-Schenkel und einer Dichtlippe gegenüberliegend als der andere Schenkel des U. Wenn nun der erwähnte Klemmwinkel nur den einen Teil des U, d.h. den Klemmteil des Dichtstreifens, umgreift, versteht sich, daß der übrige Teil des Dichtstreifens frei aus dem Klemmwinkel heraussteht und vollständig und ausschließlich der Abdichtung dient. Durch die Dichtlippe kann der Spalt zwischen zwei aufeinanderfolgenden Trögen flexibel abgedichtet werden, und außerdem ist der Dichtstreifen erfindungsgemäß in der Lage, nach der Umlenkung an beiden Zellenbandfilterenden, d.h. am äußersten Ende des Filterdecks, wieder in die Normalposition zurückzukommen und gegen den nächsten Trog abzudichten.

Dabei ist es erfindungsgemäß von besonderem Vorteil, wenn der den Klemmteil des U bildende Schenkel länger als der die Dichtlippe bildende Schenkel ist, die Dichtlippe mittels eines die Schenkel verbindenden Überbrückungssteges vom Klemmteil im Abstand gehalten ist, und wenn im abdichtenden Zustand zwischen zwei Trögen des Filterdecks das U des Dichtstreifens nach unten offen ist. Der sich über die gesamte Breite des Troges von einem Dammende zum gegenüberliegenden Dammende erstreckende Dichtstreifen mit U-förmigem Profil wird also derart in den Klemmwinkel eingeschoben und von diesem lösbar gegen die Kante des Troges festgeklemmt, daß der längere Schenkel des U, welcher den Klemmteil darstellt, der Anbringung am Trog dient, während der herausstehende Teil, und dies ist der Überbrückungssteg und die von diesem abstehende Dichtlippe, einzig und allein der Dichtfunktion dient. Die Dichtlippe ragt also, wenn man von oben auf das Filterdeck blickt, ebenso wie der Klemmteil des Dichtstreifens innerhalb des Spaltes zwischen zwei Trögen nach unten, so daß mit weiterem Vorteil die Fläche des Filterdecks, auf welchem das Filtertuch zu liegen kommt, eben ausgestaltet sein kann, ohne daß die Dichtwirkung beeinträchtigt ist, denn die Dichtlippe kann sich in gewünschter Form an die gegenüberliegende Trogkante anlegen, so daß der Spalt zwischen den zwei hintereinanderlaufenden und einen Teil des Filterdecks bildenden Tröge zuverlässig abgedichtet ist. Damit ist das Vakuum des Filterdecks einwandfrei aufrechterhalten, und mithin hat das neue Vakuumfilter eine zuverlässige Funktion.

Bei einer besonders günstigen Ausführungsform der Erfindung ist der Klemmteil des Dichtstreifens im Querschnitt als langer Schenkel des U zum freien Ende des Schenkels verdickt ausgebildet und endet auf der Seite des Überbrückungssteges an einer einen Sitz bildenden Schulter, wobei vorzugsweise zwischen Sitz und freiem Ende des Klemmteils zum Inneren des U hin gerichtet für die Bildung eines Zahnprofils weitere Schulterabsätze vorgesehen sind. Durch die Verdickung des Klemmteils, welcher der längere Schenkel des U ist, ergibt sich ersichtlich eine Klemm- und Haltefunktion für den Dichtstreifen nicht nur in Bewegungsrichtung der Tröge sondern auch senkrecht aus dem Trogboden heraus, d.h. bei Betrachtung des Filterdecks im Betrieb vertikal zu diesem nach oben. Mit anderen Worten wird der Dichtstreifen durch seine beschriebene Ausgestaltung zuverlässig von dem Klemmwinkel in der gewünschten Position gehalten. Betrachtet man den Dichtstreifen im Querschnitt und von diesem insbesondere den Klemmteil, so hat dieser erfindungsgemäß eine gegenüber der Kante des Troges anliegende, im wesentlichen ebene Außenfläche, welches auch die Außenseite des U ist. Der Klemmteil hat ferner gegenüberliegend das Zahnprofil, welches z.B. aus zwei groben Zähnen besteht, welche durch die erwähnten Schulterabsätze gebildet sind. Betrachtet man das Profil des Klemmteils in der Lage am Filterdeck, so daß also das U des Dichtstreifens oben geschossen und unten offen ist, dann kann man die Verdickung dieses langen Schenkels des U, d.h. des Klemmteils, als am freien Ende des U-Schenkels größer als im Bereich des Sitzes annehmen. Das Zahnprofil ist dabei derart ausgestaltet, daß die äußere Spitze der Zähne nach oben zum Grund des U gerichtet bzw. der Grund der Zähne mehr nach unten außen zum freien Ende des langer Schenkels hin gerichtet sind. Vorzugsweise sind zwischen dem verdickten Ende des Klemmteils unten und der den Sitz bildenden Schulter zwei Zähne vorgesehen.

Der Zweck des Zahnprofils ist es, den Klemmteil des Dichtstreifens fest im Klemmwinkel zu verankern, so daß sich der Dichstreifen im Betrieb weder in Richtung der Bewegung der Tröge noch senkrecht dazu, z.B. vertikal nach oben aus dem Filterdeck herausbewegen kann.

Die den Sitz bildende Schulter ist der Bereich, an welchem der Klemmteil des U endet. Im eingebauten und festgeklemmten zustand des Dichtstreifens greift nämlich die eine freie Stützkante des Klemmwinkels in diesen Sitz ein. Daraus ergibt sich, daß der übrige Teil der Dichtlippe, d.h. der Überbrückungssteg einer seits und die Dichtlippe andererseits frei aus dem Klemmwinkel herausstehen und einzig für die Funktion der Abdichtung verwendet werden können. Man erkennt die Vorteile des erfindungsgemäß ausgestalteten Dichtstreifens, dessen einer Teil einer zuverlässigen Klemmung und dessen anderer Teil (Überbrückungssteg und insbesondere Dichtlippe) allein dem Zwecke der Abdichtung dienen.

Dabei ist es weiterhin von besonderem Vorteil, wenn erfindungsgemäß die Länge der Dichtlippe als kurzer Schenkel des U des Dichtstreifens etwa gleich dem abstand zwischen der den Sitz bildenden Schulter am gegenüberliegenden Schenkel und dem Überbrückungssteg ist; und vorzugsweise die Dichtlippe gegenüber den glatten Außendfläche des Klemmteils unter einem das freie Ende des U erweiternden Winkel angestellt ist. Der Dichtstreifen gemäß der Erfindung ist also so in den Spalt zwischen zwei Trögen eingelegt, daß er von oben geschlossen ist, weil sich das U-förmige Profil nach unten öffnet. Dabei wird dir eine vom Filterdeck nach unten blickend sich erstreckende Schenkel als Klemmteil für die Klemmung verwendet und der gegenüberliegende, sich ebenso nach unten erstreckende andere kürzere Schenkel, nämlich die Dichtlippe, ausschließlich für die Dichtung verwendet. Damit die Abdichtfunktion besonders effektiv ist, stellt man die Dichtlippe unter dem erwähnten Winkel derart an, daß das U-profil des Dichtstreifens ein nach unten offenes und erweitertes U darstellt. Der Winkel beträgt vorzugsweise 10° bis 40° und insbesondere 20° bis 30°. Bei einer sehr zweckmäßigen praktischen Ausführungsform, die bereits gute Filtriererfolge gezeigt hat, beträgt dieser Anstellwinkel zur Senkrechten 25°.

Während sich aus den vorstehenden Erläuterungen die zuverlässige Abdichtfunktion des Dichtstreifens ergibt, wenngleich er auch zuverlässig am jeweiligen Trog festklemmbar ist, erläutern die nachfolgenden Ausführungen im einzelnen, wie die Auswechselbarkeit des Dichtstreifens verbessert wurde. Erfindungsgemäß ist nämlich bei einer bevorzugten Ausführungsform vorgesehen, daß der Klemmwinkel im Profil L-förmig ist, mit einerseits einem gegen den Klemmteil des Dichtstreifens drückenden Klemmschenkel mit in den Sitz des Klemmteils des Dichtstreifens greifender Stützkante am freien Ende und mit andererseits einem unter den Trogboden greifenden Führungsschenkel, welcher in der Führungsnut wenigstens einer unter dem Trogboden und/oder an der Außenfläche des Dammes befestigten Gleitführung verschiebbar gehaltert ist. Es ist leicht verständlich, daß das Profil des Klemmwinkels L-förmig ist. Zum besseren Verständnis ist jeder Schenkel des L bezeichnet, nämlich der eine Schenkel als Klemmschenkel, der bei horizontal liegend angeordnetem Filterdeck etwa bzw. überwiegend vertikal ausgerichtet liegt. Er sorgt für das Andrücken des Dichtstreifens im Bereich dessen Klemmteils. Der streifenartige Körper des Klemmteils ist also parallel zu dem Klemmschenkel angeordnet und liegt zwischen dem Klemmschenkel einerseits und der im wesentlichen parallel dazu angeordneten Kante des Troges andererseits.

Dieser Klemmschenkel weist außerdem an seinem freien Ende eine Stützkante auf. Es handelt sich hier um die - wie schon oben kurz erwähnt - in den Sitz des Klemmteils des Dichtstreifens eingreifende Stützkante. Die Sitz, welcher sich über die gesamte Länge des Dichtstreifens wie eine Schulter erstreckt, legt sich also im Einbauzustand auf die Stützkante des Klemmschenkels des Klemmteils, wodurch die Montage erheblich erleichtert wird, weil der Monteur den Dichtstreifen soweit in den Raum zwischen Klemmwinkel und Trogkante eindrükken kann, bis er den entsprechenden Widerstand vorfindet und bis übrigens die äußere, sich oben befindende Außenfläche des Überbrükkungssteges bündig zu den in die Horizontale abgewinkelten Rändern der jeweiligen Trogkanten liegt. Auf diese Ränder der Trogkante mit dazwischen angeordnetem Dichtstreifen wird unter anderem das Filtertuch aufgelegt. Nur der Vollständigkeit halber sei hier erwähnt, daß das Filtertuch im Bereich des Troges innerhalb seiner Kanten auf einer Siebplatte liegt.

Der andere Schenkel des L-förmigen Profils des Klemmwinkels wird der Führungsschenkel genannt. Dieser greift also unter den Trogboden und ist in der Führungsnut einer Gleitführung bewegbar, die unter dem Trogboden und/oder an der Außenfläche des jeweiligen Dammes des Troges befestigt ist. Zwischen dem Trogboden unten und der Gleitführung oben befindet sich also die erwähnte Führungsnut, in welcher der Führungsschenkel des Klemmwinkels verschiebbar ist. Durch diese Verschieblichkeit ergibt sich die lösbare Ausgestaltung der Dichtstreifenbefestigung. Sieht man nämlich geeignete Zugmittel vor, dann kann man ersichtlich den Klemmwinkel gegen die Kante des Troges ziehen und den Dichtstreifen dazwischen festklemmen; andererseits beim Lösen der Zugmittel den Dichtstreifen bequem zum Austausch herausnehmen.

Diese Zugmittel sind erfindungsgemäß mit Vorteil besonders dadurch geschaffen, daß eine neben der Gleitführung bewegbare und am Führungsschenkel des Klemmwinkels befestigte Einhängeöse mit einer an der Gleitführung vorzugsweise lösbar befestigten Zugfeder in Eingriff steht. Die Zugfeder ist also einerseits an der fest am Trog angebrachten Gleitführung eingehängt und wirkt andererseits auf eine Einhängeöse, die ihrerseits am Klemmwinkel befestigt ist. Ersichlich wird der Klemmwinkel durch die Zugfeder an die Gleitführung und damit an den Trog bzw. seine Trogkante herangezogen. Diese Zugkraft bewirkt die Klemmung.

Dabei ist es weiterhin günstig, wenn erfindungsgemäß die Wirkrichtung der Zugfeder im wesentlichen parallel zur Bewegungsrichtung der Tröge liegt und wenn mehere, über die Breite des Troges verteilt, im Abstand voneinander angeordnete Gleitführungen, Einhängeösen und Zugfedern vorgesehen sind. Der abzudichtende Spalt zwischen zwei Trögen hat die gleiche längliche Form wie der Dichtstreifen, und der Klemmwinkel übergreift den Klemmteil des Dichtstreifens mindestens über große Bereiche des Klemmteils. Bei einer Ausführungsform kann der Klemmwinkel die gleiche Länge wie der Dichtstreifen haben und sich ebenso wie dieser von einem Dammende über den Trogboden zum gegenüberliegenden Dammende erstrecken. Dabei hat der Klemmwinkel die gleiche Gestalt wie der Querschnitt des Troges, in Bewegungsrichtung des Troges gesehen. Bei einer anderen Ausführungsform kann der Klemmwinkel aber mehrteilig ausgestaltet sein; vorzugsweise ein Teil für den jeweiligen Damm und Teil für den Trogboden; wobei für eine andere Ausführungsform auch für den Trogboden mehrere Klemmwinkel vorgesehen werden können. Wichtig aber ist, daß jeder Klemmwinkel über mehrere Zugmittel gegen die Trogkante gezogen wird. Deshalb sind mehrere Gleitführungen mit den entsprechenden zugehörigen Teilen vorgesehen.

Eine weitere, zweckmäßige Ausführungsform der Erfindung ist dadurch gekennzeichnet, daß die hintere Kante des in Bewegungsrichtung vorderen Troges des Filterdecks etwa vertikal vom Trogboden hochsteht, den Dichtstreifen mit Klemmwinkel aufweist und außen mit der oben befindlichen Außenfläche des Überbrückungssteges des Dichtstreifens bündig abschließt und daß die vordere Kante des nachlaufenden Troges unter einem sich nach oben erweiternden Winkel gegen dessen Boden derart hochsteht, daß die Außenfläche dieser Kante gegen die Außenfläche der Dichtlippe des Dichtstreifens flächig andrückbar ist. Die elastischen Eigenschaften des Dichtstreifens mit Dichtlippe, insbesondere wenn die Dichtlippe unter einem Anstellwinkel vom Klemmteil des Dichtstreifens heraussteht, sind durch die schräge Kante des benachbarten Troges optimal genutzt. Es ist eine flächige Dichtung geschaffen, die besonders zuverlässig ist.

Erfindungsgemäß ist also eine sehr zweckmäßige, einwandfrei dichtende und schnell auswechselbare Zellendichtung geschaffen, so daß die bekannten Vakuum-Zellenbandfilter mit großer Anzahl von hintereinanderlaufenden Trögen zuverlässig arbeitet. Der sich konstruktiv ergebende und nicht vermeidbare Spalt zwischen den Trögen kann flexibel abgedichtet werden, so daß ein Vakuumverlust mit Vorteil verhindert wird. Auch nach der Umlenkung an den beiden Enden der Bandfilter kommt der erfindungsgemäße Dichtstreifen wieder in seine gewünschte Normalposition zurück, so daß er gegen den nächsten Trog, vorzugsweise den nachlaufenden Trog, wenn der Dichtstreifen am vorhergehenden Trog befestigt ist, abdichten kann.

Der Dichtstreifen ist konstruktiv in zwei Teile unterteilt, einerseits den Klemmteil und andererseits den Dichtungsteil, welcher durch die Dichtlippe gebildet wird. Der Klemmteil ist konisch nach unten verdickt und trägt ein Zahnprofil auf der konischen Seite, d.h. zum Inneren des U des Dichtungsprofils hin, so daß am Ende des konischen Teils eine Verstärkung des Klemmteils gegeben ist. Der Dichtstreifen ist auch mit einem Sitz für den Klemmwinkel versehen, so daß sich der Dichtstreifen sehr schnell in die gewünschte Position zwischen zwei Trögen anordnen läßt.

Der bewegliche Klemmwinkel wird durch eine Anzahl von Zugfedern unter Spannung gehalten, und bei einer bevorzugten Ausführungsform ist der Klemmschenkel dieses Klemmwinkels erfindungsgemäß um mindestens 15° nach innen geneigt, d.h. die beiden Schenkel des L stehen nicht senkrecht zueinander sondern schließen einen Winkel von 60° bis 75° ein. Die erwähnte Gleitführung hält den Klemmwinkel dann in der gewünschten Position.

An der Gleitführung ist ein Einhängestift angebracht, über welchen die Zugfeder eingehakt werden kann, die mit ihrem anderen Ende an der Einhängeöse befestigt ist. Die Spannung der Zugfeder kann man nun leicht durch Aushaken der Zugfeder vom Einhängestift aufheben, so daß danach der Klemmwinkel in Richtung des gegenüberliegenden Troges bewegt werden kann. Ersichtlich ist es nun möglich, die Dichtung bequem auszuwechseln.

Weitere Vorteile, Merkmale und Anwendungsmöglichkeiten der vorliegenden Erfindung ergeben sich aus der folgenden Beschreibung bevorzugter Ausführungsformen der Erfindung in Verbindung mit den Zeichnungen. Es zeigen:

Figur 1 perspektivisch die Draufsicht auf das durch drei Tröge gebildete Filterdeck, wobei der vorderste Trog rechts oben ebenso wie der hinterste Trog links vorn abgebrochen dargestellt sind. Außerdem ist der in Bewegungsrichtung hinterste Trog gerade abgeschnitten, um den Dichtungsaufbau im Spalt zwischen zwei benachbarten Trögen besser darzustellen,

Figur 2    eine abgebrochen dargestellte und vergrößerte Schnittansicht, wenn man in Längsrichtung des Spaltes zwischen zwei Trögen blickt,

Figur 3    das Querschnittsprofil des Dichtstreifens,

Figur 4    eine Ansicht entlang den Pfeilen A-A der Figur 2 und

Figur 5    eine Ansicht entlang der Blickrichtung B-B in Figur 4.

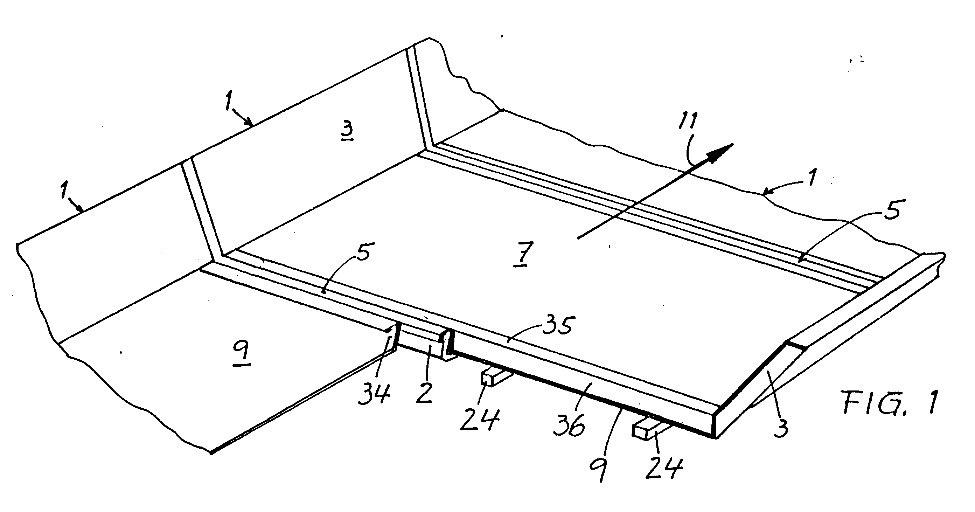

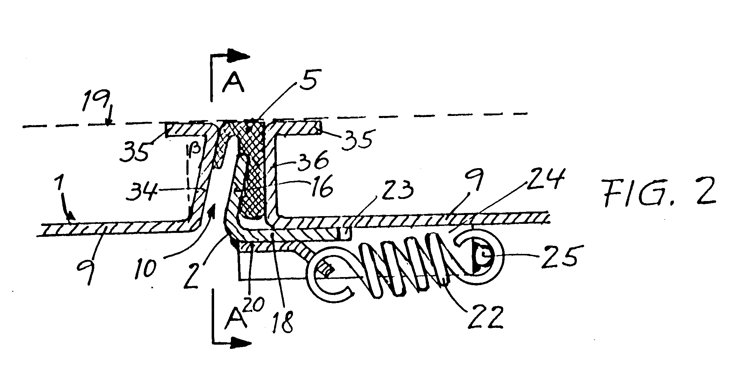

Von dem gesamten Vakuumfilter sind in Figur 1 nur die Tröge 1 mit den dazwischenliegenden Dichtstreifen 5 gezeigt. Durch die Vielzahl der Tröge 1 wird ein Filterdeck 7 gebildet, in dessen Ebene auch das aufgelegte Filtertuch 19 in Figur 2 dargestellt ist.

Die einzelnen Tröge 1 bestehen jeweils aus dem Trogboden 9 und auf dessen beiden Seiten den schräg angestellten Dämmen 3. An der in Bewegungsrichtung 11 der Tröge 1 gesehen hinteren Seite befindet sich die sogenannte hintere Kante 36 des Troges 1, die oben mit einem horizontalen Rand 35 abgeschlossen ist, derart, daß der Trog 1 in seiner Funktion und im wesentlich doch als "randlos" bezeichnet werden kann, denn es steht kein Teil über die Ebene des Filtertuches 19 nach oben aus dem Filterdeck 7 heraus.

Auch die in den Figuren 1 und 2 vorn bzw. links angeordnete gegenüberliegende Kante 34 des nachlaufenden Troges 1 ist oben mit einem horizontal abgewinkelten Rand 35 abgeschlosen.

Der Spalt 10 (Figur 2) zwischen zwei Trögen 1 ist nun durch den allgemein mit 5 bezeichneten Dichtstreifen abgedichtet, der von dem im Querschnitt L-förmigen Klemmwinkel 2 gegen die in Bewegungsrichtung 11 hintere Kante 36 des vorderen Troges 1 gehalten wird.

## Dichtstreifen 5

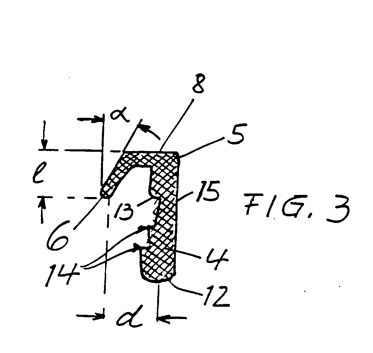

In Figur 1 ist der Dichtstreifen etwa in der Mitte abgeschnitten dargestellt, wie auch der ihnhaltende Klemmwinkel 2. Dennoch kann man sich aus der Darstellung der Figur 1 gut vorstellen, daß der Dichtstreifen 5 über die gesamte Breite des Troges 1, einschließlich der Dämme 3, einstückig von links oben nach rechts oben verläuft. Der Querschnitt des Dichtstreifens 5 ist vergrößert in Figur 3 herausgezeichnet. Man erkennt den rechten, längeren Schenkel des U, welcher den Klemmteil 4 bildet, und den gegenüberliegenden anderen, kürzeren Schenkel, welcher die Dichtlippe 6 bildet. Mittels des Überbrückungssteges 8, welcher die Schenkel 4 und 6 verbindet, wird die Dichtlippe 6 vom Klemmteil 4 in einem Abstand d gehalten, wie in Figur 3 angedeutet ist. Das Dichtstreifenprofil ist in allen Figuren hier übrigens im abdichtenden Zustand gezeigt, d.h. in der Funktion des Dichtstreifens, wie aus Figur 2 ersichtlich ist, wenn es auf das Filterdeck 7 ankommt.

Der Klemmteil 4 des Dichtstreifens 5 ist zu seinem freien Ende 12 hin verdickt ausgebildet, so daß man auch von einem konischen Klemmteil 4 sprechen kann, wobei die Verdickung sich im Bereich des freien Endes 12 befindet. Der Klemmteil 4 erstreckt sich also zwischen dem freien Ende 12 einerseits und einem Bereich am Sitz 13 andererseits. Zwischen diesem Sitz 13 und dem freien Ende 12 des Klemmteils 4 befindet sich ein Zahnprofil 14, welches zum Inneren des U hin, d.h. zur gegenüberliegenden Dichtlippe 6 hin gerichtet ist. Das Zahnprofil wird durch Schulterabsätze gebildet, die sich längs des ganzen Dichtstreifens bzw. längs seines Klemmteils erstrecken.

Die Betrachtung der Figur 3 zeigt auch, daß die Länge der Dichtlippe 6, die mit 1 angedeutet ist, etwa gleich dem Abstand zwischen dem Sitz 13 einerseits und dem Überbrückungssteg 8 andererseits ist. Aus Figur 3 sieht man auch die glatte Außenfläche 15, welche der ebenen Fläche der Kante 36 des Troges 1 enspricht. Gegenüber einer durch diese glatte Außenfläche 15 des Klemmteils 4 gedacht gelegten Ebene ist die Hauptebene der Dichtlippe 6 unter einem Winkel $\alpha$ angestellt, der vorzugsweise etwa 25° beträgt.

## Lösbarer Klemmwinkel

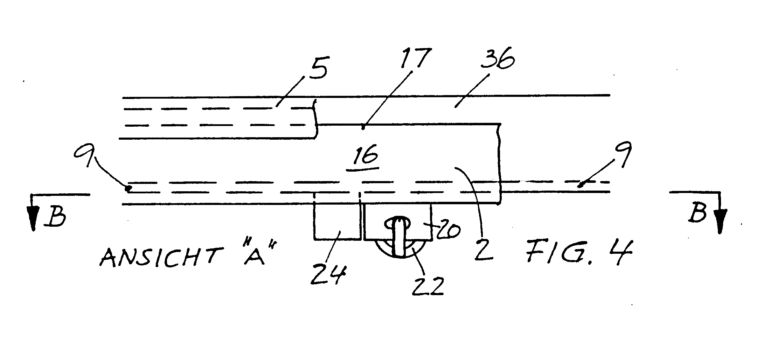

Aus Figur 2 ist im Querschnitt die Ausgestaltung des Klemmwinkels 2 erkennbar, dessen Profil L-förmig ist. Der eine Schenkel des L, in Figur 2 der obere Schenkel, wird als Klemmschenkel 16 bezeichnet, der auch in Figur 4 in der Ansicht von vorn sichtbar ist mit seiner Stützkante 17 oben, die sich in den Sitz 13 des Dichtstreifens 5 einlegt.

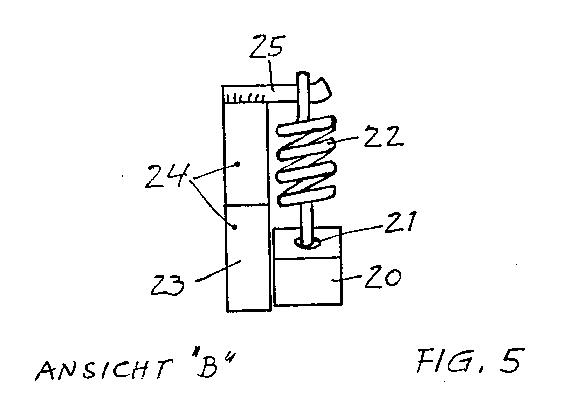

Der andere Schenkel des L-förmigen Klemmwinkels 2 ist der in Figur 2 horizontal dargestellte Führungsschenkel 18. An diesem ist unten eine Einhängeöse 20 angeschweißt, die aus einem schwach angewinkelten Blech besteht, dessen horizontaler Teil auf der Unterseite des Führungsschenkels anliegt und dessen abgewinkelter Teil das in Figur 5 sichtbare Loch 21 zum Einhängen der Zugfeder 22 trägt.

Der Führungsschenkel 18 des Klemmwinkels 2 wird in einer Führungsnut 23 einer fest am Trogboden 9 angebrachten Gleitführung 24 angelegt. Der Führungsschenkel 18 kann also in der Führungsnut 23 unterhalb des Trogbodens 9 in Bewegungsrichtung 11 gleiten, den die Zugfeder 22 hat eine Wirkrichtung parallel zur Bewegungsrichtung 11.

Die Gleitführungen 24, von denen mehrere im Abstand zueinander unter dem Trogboden angebracht sind, vorzugsweise auch außen am Damm 3 (hier nicht dargestellt), verlaufen mit ihrer Hauptrichtung (Längsachse) in Bewegungsrichtung 11. Blickt man auf Figur 5, dann sieht man diese Anordnung, die von unten nach oben in Bewegungsrichtung 11 sich erstreckt. Am oberen bzw. vordersten Ende der Gleitführung 24 erkennt man der Einhängestift 15, der einerseits an der Gleitführung 24 befestigt ist und andererseits die Halterung für die Zugfeder 22 in der auch in Figur 2 gezeigten Weise bildet.

Im Betrieb wird durch den unter mindestens 15° gegen die Vertikale bzw. gegen den Führungsschenkel 18 angestellten Klemmschenkel 16 der Dichtstreifen 5 fest gegen die hintere Kante 36 des vorderen Troges 1 gezogen, und zwar durch die Kraft der Zugfeder 22, die sich am Einhängestift 25 abstützt. Hat sich der Dichtstreifen abgenutzt, dann kann die Zugfeder vom Einhängestift 25 abgehängt werden, so daß der Klemmwinkel 2 ersichtlich in der Führungsnut 23 nach außen (in Figur 2 nach links) geschoben werden kann. Dadurch wird der Dichtstreifen 5 freigegeben, und man kann ihn bequem herausnehmen und durch einen anderen ersetzen.

**Patentansprüche**

1.  Vakuum filter für die Trennung von Feststoffen aus Flüssigkeiten mit einer umlaufenden, endlosen Reihe von Trögen (1), die ein gemeinsames horizontales Filterdeck (7) bilden, auf dem ein endloses Filtertuch (19) aufgelegt ist, wobei jeder Trog (1) einen Trogboden (9) mit je einer randlos ausgebildeten, sich quer zur Bewegungsrichtung (11) erstreckenden vorderen (34) und hinteren (36) Kante sowie seitliche Dämme (3) aufweist, und wobei ein elastischer Dichtstreifen (5) zwischen den Kanten (34, 36) aufeinanderfolgender Tröge (1) angeordnet ist, dadurch gekennzeichnet, daß der Dichtstreifen (5) sich über die gesamte Breite des Troges (1), einschließlich der Dämme (3), erstreckt und daß der Dichtstreifen (5) von einem federbelastet bewegbaren Klemmwinkel (2) gegen die in Bewegungsrichtung (11) vordere (34) und/oder hintere Kante (36) des Troges (1) lösbar festgeklemmt ist.

2.  Vakuumfilter nach Anspruch 1, dadurch gekennzeichnet, daß der Dichtstreifen (5) über die gesamte Breite des Troges (1), einschließlich der Dämme (3), einstückig verlaufend angebracht und im Querschnitt etwa U-förmig ist, wobei der eine Schenkel des U als Klemmteil (4) und der andere als Dichtlippe (6) ausgestaltet ist, und daß der Klemmwinkel (2) nur den Klemmteil (4) des Dichtstreifens (5) umgibt.

3.  Vakuumfilter nach Anspruch 1 oder 2, dadurch gekennzeichnet, daß der den Klemmteil (4) des U bildende Schenkel länger als der die Dichtlippe (6) bildende Schenkel ist, die Dichtlippe (6) mittels eines die Schenke (4,6) verbindenden Überbrückungssteges (8) vom Klemmteil (4) im Abstand gehalten ist, und daß im abdichtenden Zustand zwischen zwei Trögen (1) des Filterdecks (7) das U des Dichtstreifens (5) nach unten offen ist.

4.  Vakuumfilter nach einem der Ansprüche 1 bis 3, dadurch gekennzeichnet, daß der Klemmteil (4) des Dichtstreifens (5) im Querschnitt als langer Schenkel des U zum freien Ende (12) des Schenkels verdickt ausgebildet ist und auf der anderen Seite des Überbrückungssteges (8) an einer einen Sitz (13) bildenden Schulter endet; und daß vorzugsweise zwischen Sitz (13) und freiem Ende (12) des Klemmteils (4) zum Inneren des U hin gerichtet für die Bildung eines Zahnprofils (14) weitere Schulterabsätze vorgesehen sind (Figur 3).

5.  Vakuumfilter nach einem der Ansprüche 1 bis 4, dadurch gekennzeichnet, daß die Länge (1) der Dichtlippe (6) als kurzer Schenkel des U des Dichtstreifens (5) etwa gleich dem Abstand zwischen der den Sitz (13) bildenden Schulter am gegenüberliegenden Schenkel und dem Überbrückungssteg (8) ist; und vorzugsweise die Dichtlippe (6) gegenüber der glatten Außenfläche (15) des Klemmteils (4) unter einem das freie Ende des U erweiternden Winkel ($\alpha$) angestellt ist (Figur 2, 3).

6.  Vakuumfilter nach einem der Ansprüche 1 bis 5, dadurch gekennzeichnet, daß der Klemmwinkel (2) im Profil L-förmig ist mit einerseits einem gegen den Klemmteil (4) des Dichtstreifens (5) drückenden Klemmschenkel (16) mit in den Sitz (13) des Klemmteils (4) des Dichtstreifens (5) greifender Stützkante (17) am freien Ende und mit andererseits einem unter den Trogboden (9) greifenden Führungsschenkel (18), welcher in der Führungsnut (23) wenigstens einer unter dem Trogboden (9) und/oder an der Außenfläche des Dammes (3) befestigten Gleitführung (24) verschiebbar gehalten ist.

7.  Vakuumfilter nach einem der Ansprüche 1 bis 6, dadurch gekennzeichnet, daß eine neben der Gleitführung (24) bewegbare und am Führungsschenkel (18) des Klemmwinkels (2) befestigte Einhängeöse (20) mit einer an der Gleitführung (24) vorzugsweise lösbar befestigten Zugfeder (22) in Eingriff steht.

8.  Vakuumfilter nach einem der Ansprüche 1 bis 7, dadurch gekennzeichnet, daß die Wirkrichtung der Zugfeder (22) im wesentlichen parallel zur Bewegungsrichtung (11) der Tröge (1) liegt und daß mehrere, über die Breite des Troges (1) verteilt, im Abstand voneinander angeordnete Gleitführungen (24), Einhängeösen (20) und Zugfedern (22) vorgesehen sind.

9.  Vakuumfilter nach einem der Ansprüche 1 bis 8, dadurch gekennzeichnet, daß die hintere Kante (36) des in Bewegungsrichtung (11) vorderen Troges (1) des Filterdecks (7) etwa vertikal vom Trogboden (9) hochsteht, den Dichtstreifen (5) mit Klemmwinkel (2) aufweist und außen mit der oben befindlichen Außenfläche des Überbrückungssteges (8) des Dichtstreifens (5) bündig abschließt und daß die vordere Kante (34) des nachlaufenden Troges (1) unter einem sich nach oben erweiternden Winkel (β) gegen dessen Boden (9) derart hochsteht, daß die Außenfläche dieser Kante (34) gegen die Außenfläche der Dichtlippe (6) des Dichtstreifens (5) flächig andrückbar ist (Figur 2).

**Claims**

1.  A vacuum filter for the separation of solids from liquids comprising a circulating endless row of trays (1) which form a common horizontal filter deck (7) on which an endless filter cloth (19) is laid, wherein each tray (1) has a tray bottom (9) with front and rear edges (34 and 36 respectively) which are each of a rimless configuration and which extend transversely to the direction of movement (11), and lateral wall portions (3), and wherein an elastic sealing strip (5) is arranged between the edges (34, 36) of successive trays (1), characterised in that the sealing strip (5) extends over the entire width of the tray (1) including the wall portions (3) and that the sealing strip (5) is releasably clamped against the leading edge (34) and/or the trailing edge (36) of the tray (1), as considered in the direction of movement (11), by a spring-loadedly movable clamping angle member (2).

2.  A vacuum filter according to claim 1 characterised in that the sealing strip (5) is arranged to extend in one piece over the entire width of the tray (1) including the wall portions (3) and is of substantially U-shaped cross-section, wherein the one limb of the U-shape is formed as a clamping portion (4) and the other is formed as a sealing lip (6), and that the clamping angle member (2) only embraces the clamping portion (4) of the sealing strip (5).

3.  A vacuum filter according to claim 1 or claim 2 characterised in that the limb forming the clamping portion (4) of the U-shape is longer than the limb forming the sealing lip (6), the sealing lip (6) is held at a spacing from the clamping portion (4) by means of a bridging web portion (8) which connects the limbs (4, 6), and that in the sealing condition between two trays (1) of the filter deck (7) the U-shape of the sealing strip (5) is open downwardly.

4.  A vacuum filter according to one of claims 1 to 3 characterised in that the clamping portion (4) of the sealing strip (5) is thickened in cross-section as the long limb of the U-shape to the free end (12) of the limb and terminates on the other side of the bridging web portion (8) at a shoulder forming a seat (13); and that preferably further shoulder steps are provided between the seat (13) and the free end (12) of the clamping portion (4), directed towards the interior of the U-shape, to form a tooth configuration (14) (Figure 3).

5.  A vacuum filter according to one of claims 1 to 4 characterised in that the length (1) of the sealing lip (6) as the short limb of the U-shape of the sealing strip (5) is approximately equal to the spacing between the shoulder forming the seat (13) on the oppositely disposed limb and the bridging web portion (8); and preferably the sealing lip (6) is disposed relative to the smooth outside surface (15) of the clamping portion (4) at an angle (α) which increases the width of the free end of the U-shape (Figures 2 and 3).

6.  A vacuum filter according to one of claims 1 to 5 characterised in that the clamping angle member (2) is of L-shaped profile with on the one hand a clamping limb (16) which presses against the clamping portion (4) of the sealing strip (5), with at the free end a support edge (17) which engages into the seat (13) of the clamping portion (4) of the sealing strip (5), and with on the other hand a guide limb (18) which engages under the tray bottom (9) and which is displaceably held in the guide groove (23) of at least one sliding guide (24) which is fixed under the tray bottom (9) and/or to the outside surface of the wall portion (3).

7.  A vacuum filter according to one of claims 1 to 6 characterised in that a suspension eye (20) which is movable beside the sliding guide (24) and which is fixed to the guide limb (18) of the clamping angle member (2) is in engagement with a tension spring (22) which is preferably releasably fixed to the sliding guide (24).

8. A vacuum filter according to one of claims 1 to 7 characterised in that the operative direction of the tension spring (22) is substantially parallel to the direction of movement (11) of the trays (1) and that there are provided a plurality of sliding guides (24), suspension eyes (20) and tension springs (22), which are arranged at spacings from each other in a distributed array over the width of the tray (1).

9. A vacuum filter according to one of claims 1 to 8 characterised in that the trailing edge (36) of the tray (1) of the filter deck (7), which tray leads in the direction of movement (11), stands up substantially vertical from the tray bottom (9), has the sealing strip (5) with clamping angle member (2) and at the outside terminates flush with the outward surface, which is at the top, of the bridging web portion (8) of the sealing strip (5), and that the leading edge (34) of the following tray (1) stands up at an angle ($\beta$) which increases upwardly relative to the bottom (9) of the tray in such a way that the outside surface of said edge (34) can be pressed over an area against the outside surface of the sealing lip (6) of the sealing strip (5) (Figure 2).

**Revendications**

1. Filtre à vide destiné à séparer des matières solides d'avec des liquides, comportant une série sans fin et tournante d'auges (1), qui forment un plateau de filtration horizontal commun (7), sur lequel est disposé un tissu filtrant sans fin (19), chaque auge (1) comportant un fond d'auge (9), une arête avant (34) et une arête arrière (36) formées sans bord, et s'étendant transversalement par rapport au sens de déplacement (11), ainsi que des rebords latéraux (3), une bande d'étanchéité élastique (5) étant disposée entre les arêtes (34, 36) d'auges successives, caractérisé en ce que la bande d'étanchéité (5) s'étend sur toute la largeur de l'auge (1), y compris celle des rebords (3), et que la bande d'étanchéité (5) est bloquée par serrage, d'une manière amovible, par une cornière de serrage (2) mobile et à ressort, contre l'arête avant (34) et/ou arrière (36), quand on regarde dans le sens de déplacement (11), de l'auge (1).

2. Filtre à vide selon la revendication 1, caractérisé en ce que la bande d'étanchéité (S) est disposée d'une seule pièce sur toute la largeur de l'auge (1), y compris celle des rebords (3), et a en coupe transversale la forme approximative d'un U, l'une des branches du U ayant la configuration d'un élément de serrage (4) et l'autre celle d'une lèvre d'étanchéité (6), et que la cornière de serrage (2) n'entoure que l'élément de serrage (4) de la bande d'étanchéité (5).

3. Filtre à vide selon la revendication 1 ou 2, caractérisé en ce que la branche formant l'élément de serrage (4) du U est plus longue que la branche formant la lèvre d'étanchéité (6), la lèvre d'étanchéité (6) étant, à l'aide d'une entretoise (8) reliant les branches (4, 6), maintenue à une certaine distance de l'élément de serrage (4), et que, dans l'état assurant l'étanchéité, entre deux auges (1) du plateau de filtration (7), le U de la bande d'étanchéité (5) est ouvert vers le bas.

4. Filtre à vide selon l'une des revendications 1 à 3, caractérisé en ce que l'élément de serrage (4) de la bande d'étanchéité (5) est en coupe transversale réalisé comme étant la branche longue du U, en s'épaississant vers l'extrémité libre (12) de la branche, et, sur l'autre côté de l'entretoise (8), se termine contre un épaulement formant un siège (13) ; et que l'on prévoit de préférence, entre le siège (13) et l'extrémité libre (12) de l'élément de serrage (4), dirigés vers l'intérieur du U, et destinés à la formation d'un profil denté (14), d'autres gradins d'épaulement (Figure 3).

5. Filtre à vide selon l'une des revendications 1 à 4, caractérisé en ce que la longueur L de la lèvre d'étanchéité (6), qui est la branche courte du U de la bande d'étanchéité (5), est approximativement identique à la distance entre l'épaulement formant le siège (13) contre la branche opposée et l'entretoise (8) ; et de préférence la lèvre d'étanchéité (6) est disposée de façon à faire avec la surface extérieure lisse (15) de l'élément de serrage (4) un angle (a) qui s'élargit vers l'extrémité libre du U (Figures 2 et 3).

6. Filtre à vide selon l'une des revendications 1 à 5, caractérisé en ce que la cornière de serrage (2) a en profil la forme d'un L, avec d'une part une branche de serrage (16), qui s'appuie contre l'élément de serrage (4) de la bande d'étanchéité (5), et comportant en son extrémité libre une arête de soutènement (17) logée dans le siège (13) de l'élément de serrage de la bande d'étanchéité (5), et d'autre part avec une branche de guidage (18), logée en-dessous du fond de l'auge (9), branche qui est maintenue de façon à pouvoir coulisser dans la rainure de guidage (23) d'au moins un guidage par glissement (24), fixé en-dessous du fond d'auge (9) et/ou contre la surface extérieure du rebord (3).

7. Filtre à vide selon l'une des revendications 1 à 6, caractérisé en ce qu'un oeillet d'accrochage (20), mobile à côté du guidage par glissement (24) et fixé à la branche de guidage (18) de la cornière de serrage (2), est en prise avec un ressort de traction (22), fixé de préférence d'une manière amovible au guidage par glissement (24).

8. Filtre à vide selon l'une des revendications 1 à 7, caractérisé en ce que le sens de l'effet du ressort de traction (22) est pratiquement parallèle au sens de déplacement (11) des auges (1), et qu'on prévoit plusieurs guidages par glissement (24), oeillets d'accrochage (20) et ressorts de traction (22), répartis sur toute la largeur de l'auge (1) et situés à une certaine distance les uns des autres.

9. Filtre à vide selon l'une des revendications 1 à 8, caractérisé en ce que l'arête arrière de l'auge (1), situé en avant dans le sens de déplacement (11), du plateau de filtration (7) est relevé d'une manière approximativement verticale à partir du fond d'auge (9), présente la bande d'étanchéité (5) avec la cornière de serrage (2) et, à l'extérieur, assure une obturation en alignement avec la surface extérieure, située en haut, de l'entretoise (8) de la bande d'étanchéité (5), et que l'arête avant (34) de l'auge (1) située en aval est relevée, en faisant avec le fond de cette dernière un angle ($\beta$) élargi vers le haut, de telle sorte que la surface extérieure de cette arête (34) puisse s'appuyer complètement contre la surface extérieure de la lèvre d'étanchéité (6) de la bande d'étanchéité (5) (Figure 2).

FIG. 1

FIG. 2

EP 0 329 804 B1

FIG. 3

ANSICHT "A"

FIG. 4

ANSICHT 'B'                    FIG. 5

EP 0 329 804 B1